# EUROPÄISCHE PATENTSCHRIFT

(11) **EP 0 823 199 B1**
(45) Veröffentlichungstag und Bekanntmachung des Hinweises auf die Patenterteilung: **27.03.2002**
(21) Anmeldenummer: 97112239.5
(22) Anmeldetag: 17.07.1997
(51) Int. Cl.: A01D 43/10

(54) **Erntemaschine**
Harvesting machine
Machine de récolte

(30) Priorität: 08.08.1996 US 694085
(43) Veröffentlichungstag der Anmeldung: 11.02.1998
(73) Patentinhaber: DEERE & COMPANY, Moline, Illinois 61265-8098 (US)
(72) Erfinder: Walters, James C., Ottumwa, Iowa 52501 (US); Stephenson, Roger Dale, Ottumwa, Iowa 52501 (US); Parsons, Stephen Kenneth, Ottumwa, Iowa 52501 (US); Rosenbalm, Allan Wesley, Blakesburg, Iowa 52536 (US)
(74) Vertreter: Magin, Ludwig Bernhard

(56) Entgegenhaltungen:
- EP-A- 0 406 961
- EP-A- 0 429 382
- EP-A- 0 568 986
- WO-A-93/20680
- US-A- 5 179 822

## Beschreibung

Die Erfindung betrifft eine Erntemaschine mit einem einen quer zur Fahrtrichtung verlaufenden Hauptträger enthaltenden Hauptrahmen, einem Erntebergungsvorsatz, der an und vor dem Hauptrahmen beweglich aufgehängt ist, einer den Hauptrahmen mit einem Zugfahrzeug verbindenden Deichsel, die horizontal schwenkbar an dem Hauptträger zwischen den seitlichen Enden des Hauptrahmens angreift, und mit einem aus mehreren Abschnitten zusammengesetzten Antriebsstrang.

Die US-A-5,463,852 offenbart eine gezogene Mähmaschine mit einer Erntebergungs- und einer Gutbearbeitungsvorrichtung, die mittels einer Deichsel z. B. an einen Ackerschlepper angehängt werden kann. Die Deichsel greift in einem vertikal ausgerichteten Lager an einem Hauptrahmen an und trägt an ihrer Unterseite eine Antriebswelle, die an ihrem vorderen Ende an eine Zapfwelle des Ackerschleppers anschließbar ist und mit ihrem rückwärtigen Ende mit einem Winkelgetriebe auf der Erntebergungsvorrichtung in Verbindung steht. Das Winkelgetriebe treibt über einen Zugmitteltrieb sowohl ein Mähwerk als auch ein zweites Winkelgetriebe an, das auf einen weiteren Abschnitt des Mähwerks und auf die Gutbearbeitungsvorrichtung wirkt.

Das der Erfindung zugrunde liegende Problem wird darin gesehen, daß bei der bekannten Erntemaschine die Winkelgetriebe und der Zugmitteltrieb in die Gutbearbeitungsvorrichtung integriert sind. Dies bewirkt ein hohes Gewicht der federnd aufgehängten Gutbearbeitungsvorrichtung, was es bei der Fahrt auf unebenem Gelände schwierig macht, das Mähwerk stets mit dem richtigen Bodendruck auf dem Boden zu führen. Desweiteren ist der bekannte Antrieb schlecht zugänglich, was sich negativ auf die Servicefreundlichkeit auswirkt. Da die Antriebswelle unterhalb der Deichsel und die Deichsel selbst nicht an derselben Stelle enden, ergibt sich eine Divergenz der Längsachsen, wenn die Deichsel geschwenkt wird. Da sich die Erntebergungsvorrichtung auch in der Höhe gegenüber der Deichsel verstellt, wird das Gelenk zwischen der Antriebswelle und dem Winkelgetriebe ebenfalls ständig beaufschlagt, so daß es zu einer weiteren Ungleichförmigkeit im Antrieb des Winkelgetriebes kommt.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise weicht die Welle des ersten Abschnitts von der Deichsel weder horizontal noch vertikal ab, so daß es nicht zu unnötigen Ungleichförmigkeiten im Antrieb kommt. Ein großer Teil der Antriebskomponenten befindet sich nicht auf dem Erntebergungsvorsatz und belastet diesen nicht; sie sind auch leicht für Wartungszwecke zugänglich. Die im wesentlichen vertikalen Relativbewegungen zwischen dem Hauptrahmen und dem Erntebergungsvorsatz werden durch eine teleskopische Doppelgelenkwelle aufgenommen, während die aus der Schwenkbewegung der Deichsel herrührenden hier nicht eingehen. Es ist nur ein Antrieb bzw. ein Winkelgetriebe auf der Erntebergungsvorrichtung für das Mähwerk und die Gutbearbeitungsvorrichtung erforderlich.

Mittels einer Doppelgelenkwelle im Schwenkbereich der Deichsel kann ein Antrieb noch bei einem größeren Winkel erfolgen als bei einer Verbindung der Welle mit dem Winkelgetriebe über ein einfaches Kardangelenk.

Die Verwendung einer Überholkupplung vermeidet zum einen das Entstehen von negativen Lastspitzen im Antriebsstrang wenn vor dieser der Antrieb abgeschaltet oder blockiert wird, und eine Bedienungsperson kann beim Anhängen der Erntemaschine an einen Ackerschlepper die Gelenkwelle ohne große Mühe soweit verdrehen, bis die Zähne und Zahnlücken an der Gelenkwelle und der Zapfwelle an dem Ackerschlepper aufeinander passen.

Die Verwendung zweier horizontal schwenkbarer Winkelgetriebe zur Verbindung der Deichsel mit dem Zugfahrzeug, in der Regel einem Ackerschlepper, hat den Vorteil, daß diese in einem nahezu unbegrenzten Winkel zueinander betrieben werden können, ohne daß es zu Ungleichförmigkeiten in der Antriebsübertragung kommt.

Eine weitere Maßnahme, einen ungleichförmigen Lauf der Antriebswellen zu vermeiden, wird in der beanspruchten Anordnung und Bemessung der Doppelgelenkwelle in bezug auf die Schwenkachse der Deichsel an dem Hauptträger gesehen. Diese Anordnung bewirkt, daß an beiden als Universalgelenken ausgebildeten Gelenken dieselben Geschwindigkeitsverhältnisse herrschen.

Die Verwendung eines Zugmittelgetriebes im bzw. als zweiten Abschnitt stellt zum einen eine Überlastsicherung und zum anderen eine günstige Bauweise dar. Wenn es auf die Überlastsicherung ankommt, ist ein Riemen, insbesondere ein Mehrfachkeilriemen sinnvoll, andernfalls kann auch eine Kette verwendet werden.

Wenn die Ausgangswelle des Getriebes des zweiten Abschnitts unterhalb der oberen und außerhalb der seitlichen Erstreckung des Hauptträgers angeordnet ist, tritt keine Kollision zwischen einer auf die Ausgangswelle aufgesetzten Gelenkwelle und dem Hauptrahmen ein, wenn der Erntebergungsvorsatz vertikal bewegt wird.

Die dem Erntebergungsvorsatz abgewandte Lage des Getriebes an dem Hauptträger hat den Vorteil, daß dieses insbesondere für Wartungsarbeiten leicht zugänglich ist.

Eine teleskopische Doppelgelenkwelle im dritten Abschnitt erlaubt vielfältige Bewegungen zwischen dem Erntebergungsvorsatz und dem Hauptrahmen, ohne daß dadurch der Antrieb spürbar beeinträchtigt würde.

Ein kompakter Antrieb der verschiedenen Komponenten des Erntebergungsvorsatzes mit wenig Mitteln und einer guten Antriebsumlenkung wird dadurch erreicht, daß der vierte Abschnitt ein Winkelgetriebe aufweist, dessen Eingangswelle im wesentlichen mit der Ausgangswelle des Getriebes fluchtet und dessen zu dem Mähwerk des Erntebergungsvorsatzes führende Ausgangswelle im wesentlichen vertikal verläuft.

Da die Gutbearbeitungsvorrichtung, z. B. Quetschwalzen oder ein Aufbereitungsrotor, schnell verstopfen oder von Fremdkörpern angehalten werden kann, ist es sinnvoll, wenn das Winkelgetriebe auf dem Erntebergungsvorsatz über eine Zugmittelgetriebe auf die Gutbearbeitungsvorrichtung wirkt.

Wenn ein zusätzliches Winkelgetriebe verwendet wird, können beide Winkelgetriebe in einfacher Bauweise gehalten und die Länge des Zugmittels zu der Gutbearbeitungsvorrichtung kürzer gehalten werden, als dies möglich ist, wenn nur ein Winkelgetriebe relativ hoch angebracht wird.

Mittels eines turmartigen Halters auf dem Hauptträger zur schwenkbaren Aufnahme der Deichsel kann diese ohne großen Aufwand und, ohne den Hauptträger besonders anpassen zu müssen, in der entsprechenden Höhe und mit einem ausreichenden Schwenkvermögen angeschlossen werden.

Eine gerade und hohl ausgebildete Deichsel ist nicht nur fertigungstechnisch günstig, sondern erlaubt auch die Aufnahme von Antriebswellen in ihrem Innern, die somit raumsparend und gegen äußere Einflüsse geschützt untergebracht werden können.

Eine Alternative einer Gutbearbeitungsvorrichtung sieht parallel zueinander verlaufende Gutbearbeitungswalzen vor, die gegensinnig angetrieben werden und einen Spalt zwischen sich belassen, durch den das Erntegut hindurch gequetscht wird. An wenigstens einem Ende vorgesehene Stummelwellen dienen sowohl der Antriebseinleitung, als auch deren drehbarer Lagerung im Rahmen oder Seitenwänden der Erntemaschine. Für den Antrieb werden vorteilhafterweise teleskopische Doppelgelenkwellen verwendet, so daß wenigstens eine der Gutbearbeitungswalzen gegenüber der anderen radial beweglich ist und somit den Durchlaß unterschiedlich großer Erntegutmengen erlaubt.

Die Verwendung einer Überlastkupplung im allgemeinen bzw. einer Rutschkupplung im einzelnen schützt den gesamten Antriebsstrang vor Lastspitzen, die bei hohen Gutmengen oder dem Auftreten oder Eintreten von Fremdkörpern auftreten können.

In der Zeichnung sind mehrere nachfolgend näher beschriebene Ausführungsbeispiele der Erfindung dargestellt. Es zeigt:
- Fig. 1: eine Erntemaschine in Seitenansicht mit einem Mähwerk, einer Gutbearbeitungsvorrichtung und einem Antrieb,
- Fig. 2: die Erntemaschine aus Figur 1 in einer Ansicht von hinten,
- Fig. 3: die Erntemaschine aus den Figuren 1 und 2 in einer Draufsicht mit dem Antrieb für das Mähwerk und der Gutbearbeitungsvorrichtung,
- Fig. 4: einen Teil des Antriebs in einer vergrößerten Ansicht und von hinten, wobei der Antrieb keine Rutschkupplung enthält,
- Fig. 5: den Antrieb aus Figur 4, jedoch mit einer Rutschkupplung,
- Fig. 6: die Erntemaschine in Seitenansicht mit dem Mähwerk und einer als Aufbereitungsrotor ausgebildeten Gutbearbeitungsvorrichtung,

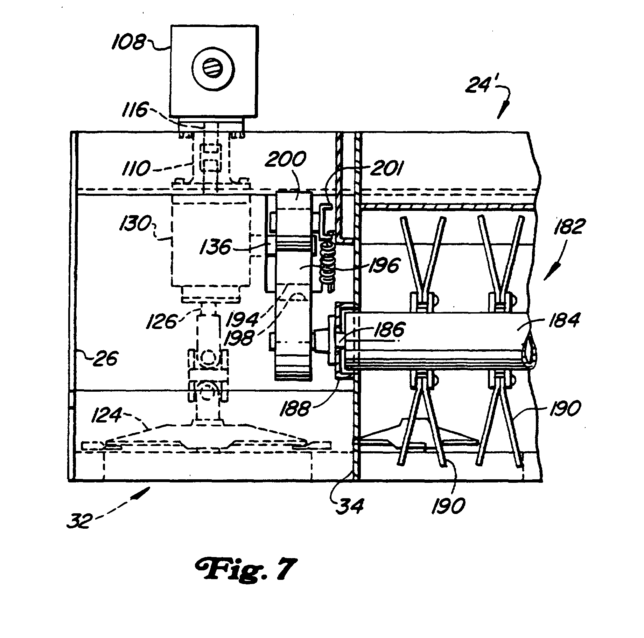

- Fig. 7: den Antrieb für die Erntemaschine aus Figur 6 in vergrößerter Darstellung und von hinten,
- Fig. 8: den Antrieb der Erntemaschine aus Figur 6 in Seitenansicht und
- Fig. 9: einen Teil des Antriebs für die Erntemaschine aus Figur 6 in vergrößerter Darstellung und von hinten.

Zu Beginn der Beschreibung wird darauf hingewiesen, daß, obwohl manche Komponenten als paarweise vorhanden beschrieben sind, nur jeweils eine davon dargestellt ist, was so zu verstehen ist, daß die fehlende gleich oder spiegelbildlich ausgebildet ist. Bezeichnungen wie "hinten", "vorne", "rechts" und "links" sind aus der Sicht eines hinter der Erntemaschine stehenden Betrachters zu verstehen.

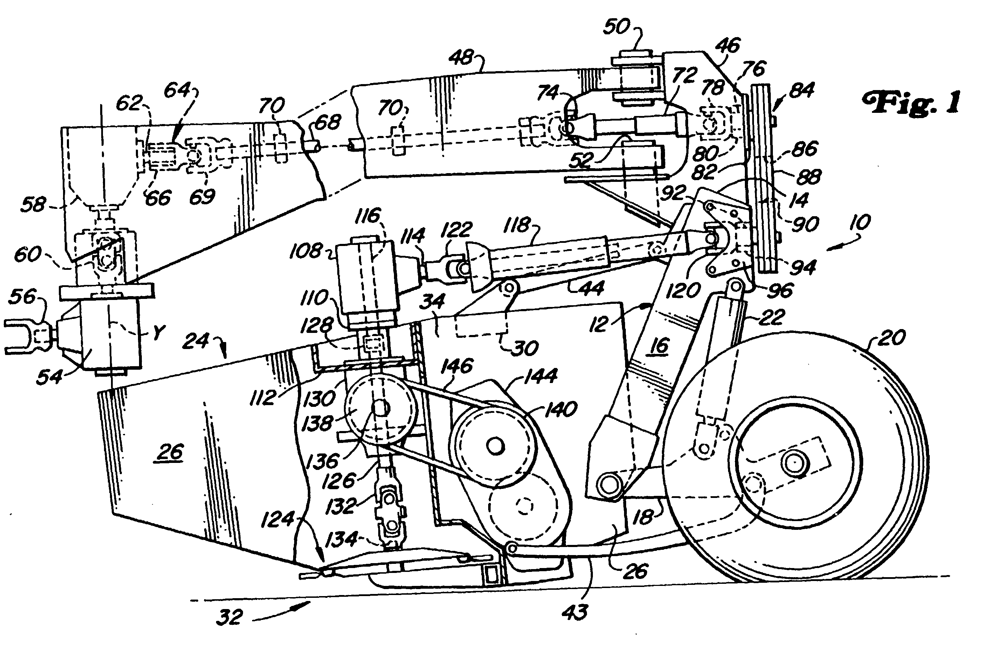

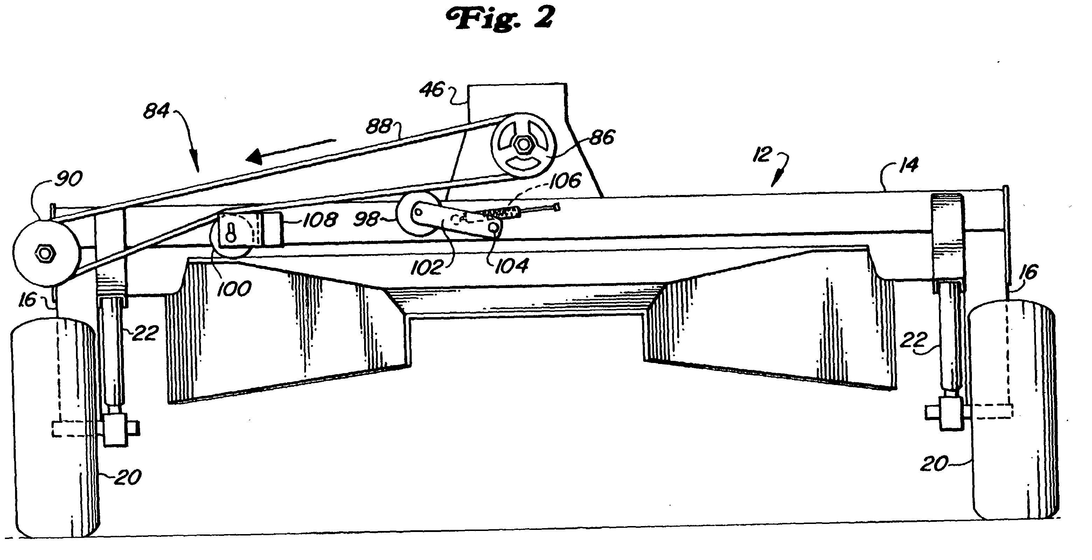

In den Figuren 1 und 2 ist eine Erntemaschine 10 in der Art eines Mähaufbereiters dargestellt, der eine mittig angeschlossene Deichsel 48 und einen Hauptrahmen 12 mit einem sich quer erstreckenden rohrförmigen Hauptträger 14 aufweist, von dessen entgegengesetzten Enden aus sich nach unten Schenkel 16 zur Aufnahme von Rädern 20 erstrecken. Ein Paar Arme 18 zum Tragen der Räder 20 weist vordere Endbereiche auf, die vertikal schwenkbar an die Schenkel 16 angeschlossen sind, und an deren rückwärtigen Endbereiche ist jeweils ein Rad 20 drehbar angebracht. Zwischen jedem Arm 18 und dem Hauptträger 14 ist jeweils ein Hydraulikzylinder 22 eingebaut, der so bedienbar ist, daß er den Hauptrahmen 12 in Bezug auf den Boden anhebt und absenkt.

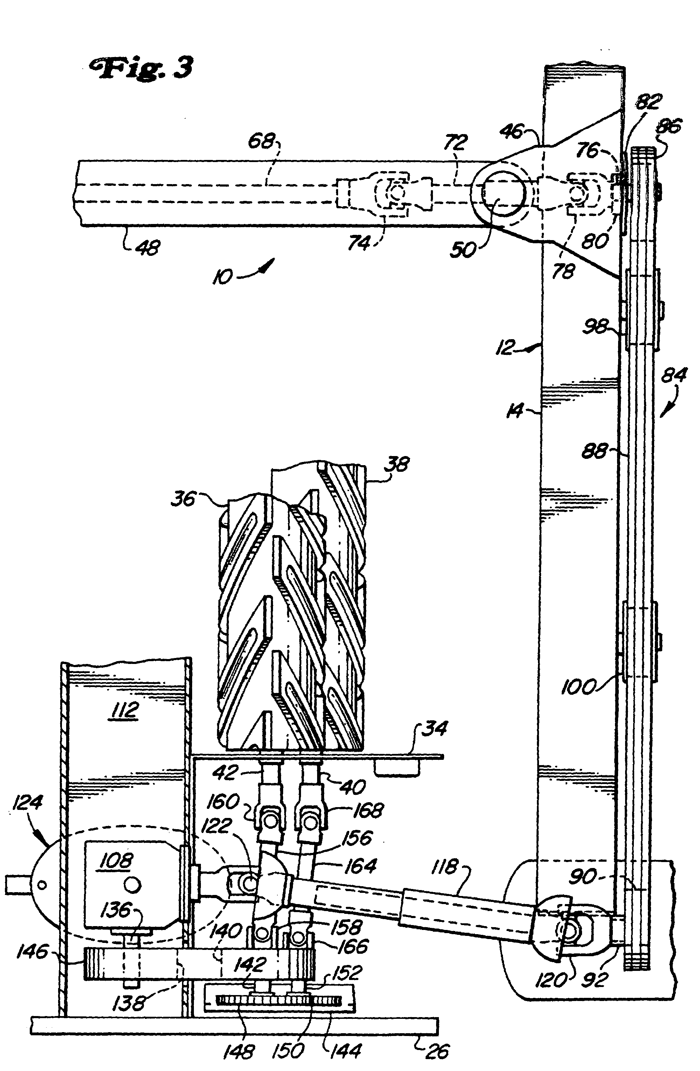

Ein Erntebergungsvorsatz 24 ist vor dem Hauptrahmen 12 angeordnet und an diesem aufgehängt. Der Erntebergungsvorsatz 24 enthält sich gegenüberliegende Seitenwände 26, die mittels Rahmenelement untereinander verbunden sind, wobei zu den Rahmenelementen ein mittiger Querbalken 30 und ein Schneidscheiben enthaltendes Mähwerk 32 gehört, das sich zwischen den Seitenwänden 26 erstreckt und an einer unteren zwischen ihren Enden liegenden Stelle an diese angeschlossen ist. Es wird im weiteren Bezug auf Figur 3 genommen, in der zu sehen ist, daß rückwärtig des Mähwerks 32 zwischen vertikalen Wänden 34, die einen sich nach hinten erstreckenden Gutkanal begrenzen, obere und untere Gutbearbeitungswalzen 36 bzw. 38 vorhanden sind, die Teil einer Gutbearbeitungsvorrichtung sind. Gegenüberliegende Enden der unteren Gutbearbeitungswalze 38 werden jeweils von einem Paar von Stummelwellen 40 gebildet, die in betreffenden Lagern in den Wänden 34 aufgenommen werden. Sich gegenüberliegende Enden der oberen Gutbearbeitungswalze 36 werden von einem gleichen Paar von Stummelwellen 42 gebildet, die sich durch nicht gezeigte vertikal verlaufende längliche Öffnungen in den Wänden 34 erstrecken und von einem nicht gezeigten Paar Arme getragen werden, die jeweils an einer Wand 34 befestigt sind, und zwar in der Nähe der sich gegenüberliegenden Enden der Gutbearbeitungswalze 36, damit sich diese auf die untere Gutbearbeitungswalze 38 zu oder von dieser weg bewegen kann. Der Erntebergungsvorsatz 24 stützt sich an dem Hauptrahmen 12 über ein Paar untere Lenker 43 ab, deren rückwärtige Endbereiche jeweils schwenkbar an einen entsprechenden Arm 18 angeschlossen sind und deren vordere Endbereiche schwenkbar mit einem unteren Endbereich des Erntebergungsvorsatzes 24 unmittelbar hinter dem Mähwerk 32 verbunden sind. Ungefähr mittig ist ein oberer Lenker 44 vorgesehen, dessen sich gegenüberliegende Endbereiche jeweils schwenkbar an den Querbalken 30 und an einen aufrechten Halter 46 angeschlossen sind, wobei der Halter 46 mit dem Hauptträger 14 an einer Stelle mittig zwischen seinen Enden angreift. Die sich längs erstreckende, gerade, rohrförmige Deichsel 48 erstreckt sich über den Erntebergungsvorsatz 24 und ist mit oberen und unteren axial zueinander ausgerichteten Schwenkbolzen 50 bzw. 52 an den aufrechten Halter 46 zum Durchführen einer horizontalen Schwenkbewegung angeschlossen. Ein vorderer Endbereich der Deichsel 48 ist zum Anschluß an eine nicht gezeigte Anhängekupplung mit Schwenkmöglichkeit ausgebildet, die ihrerseits so ausgestaltet ist, daß sie an vertikal schwenkbare Arme einer Anhängevorrichtung eines Zugfahrzeugs, z. B. eines Ackerschleppers, angeschlossen werden kann.

Die Leistung zum Antreiben des Mähwerks 32 und der Gutbearbeitungswalzen 36 und 38 der Erntemaschine 10 wird von einer nicht gezeigten Zapfwelle des Zugfahrzeugs abgenommen. Aus diesem Grund ist an dem vorderen Ende der Deichsel 48 zum Anschluß an die Zapfwelle des Zugfahrzeugs, z. B. mittels einer nicht gezeigten teleskopischen, verbindenden Gelenkwelle, ein erstes Winkelgetriebe 54 in rechtwinkliger Bauweise und um eine aufrechte Y-Achse drehbar vorgesehen. Dieses erste Winkelgetriebe 54 enthält eine sich nach vorne erstreckende Eingangswelle 56, die zum Anschluß an den rückwärtigen Bereich der teleskopischen Gelenkwelle ausgebildet ist, deren vorderer Endbereich von einem gezahnten Gelenkanschluß für die Verbindung mit dem gezahnten Ende der Zapfwelle des Zugfahrzeugs ausgebildet ist. Längs der Y-Achse und ausgerichtet zu einer aufrechten Ausgangswelle des ersten Winkelgetriebes 54 befindet sich eine Eingangswelle eines zweiten Winkelgetriebes 58 in rechtwinkliger Ausführung, das starr an einem vorderen Endbereich der Deichsel 48 befestigt ist. Eine kurze Welle 60 mit zwei Gelenken verbindet die Ausgangswelle des ersten Winkelgetriebes 54 mit der Eingangswelle des zweiten Winkelgetriebes 58. Das zweite Winkelgetriebe 58 weist eine nach hinten verlaufende Ausgangswelle 62 auf, die unter einem rechten Winkel zu der Y-Achse ausgerichtet ist und eine gezahnte Verbindung mit einer nicht gezeigten Eingangsbüchse einer Überholkupplung 64 oder eines Freilaufs eingeht. Die Eingangsbüchse wird innerhalb eines zylindrischen Aufnehmers 66 aufgenommen, der einen Teil des Ausgangs der Überholkupplung 64 bildet und an diese angeschlossen ist, um Drehmoment zu übertragen, allerdings nur, wenn eine Drehbewegung in der Vorwärtsrichtung stattfindet. Die Übertragung geschieht über Klinken, die in Ausnehmungen in der Außenseite der Eingangsbüchse aufgenommen sind und in Eingriff gelangen mit einem ringförmigen Satz innerer Ratschenflächen, die in die Innenseite des Aufnehmers 66 eingearbeitet sind. Der Aufnehmer 66 ist gemeinsam mit einem Gelenk ausgebildet, das mittels Bolzen an ein gleiches Gelenk angeschlossen ist, das an einem vorderen Endbereich einer an oder in der Deichsel 48 montierten Welle 68 angreift, um so ein Gelenk 69 zu bilden. Die Welle 68 befindet sich innerhalb der Deichsel 48 und erstreckt sich in dieser im wesentlichen in ihrer vollen Länge. Die Überholkupplung 64 verhindert das Entstehen von negativen Lastspitzen in dem Antriebsstrang der Erntemaschine 10. Zusätzlich erlaubt es die Überholkupplung 64, die stromaufwärts von ihr befindlichen Antriebskomponenten frei von Hand rückwärts zu drehen. Auf diese Weise ist es möglich, eine gezahnte Muffe am vorderen Ende der nicht gezeigten teleskopischen Gelenkwelle, die sich zwischen der Eingangswelle 56 und der Zapfwelle des Zugfahrzeugs erstreckt, mit den Zähnen auf der Zapfwelle in Fluchtung zu bringen, wenn die Gelenkwelle an die Zapfwelle angeschlossen wird. Lager 70 sind entlang der Welle 68 angeordnet und stützen diese, wobei darauf hingewiesen wird, daß die Welle 68 und die Lager 70 vormontiert, in den Innenraum der Deichsel 48 eingeschoben und dann an Ort und Stelle festgelegt werden. Es wird daraus erkenntlich, daß die rohrförmige Deichsel 48 sowohl als Schutzschild wie auch als Stütze für die Welle 68 dient.

Eine teleskopische Doppelgelenkwelle 72 mit Gleichwinkelgelenken weist vordere und rückwärtige Gelenke 74, 78 auf, die jeweils an eine Gabel an dem rückwärtigen Ende der Welle 68 zum Bilden des Gelenks 74 und an eine Gabel an dem vorderen Ende einer als Stummelwelle ausgebildeten Eingangswelle 76, die der Abstützung einer Zugmittelscheibe 86 dient, zum Bilden des Gelenks 78 angeschlossen ist, z. B. mittels Bolzen, Schrauben oder dergleichen. Die Doppelgelenkwelle 72 schneidet die Achse, die von den Schwenkbolzen 50 und 52 definiert wird, wenn sich die Deichsel 48 in einer Geradeausstellung befindet. Die Eingangswelle 76 erstreckt sich durch ein Lager und ist in diesem drehbar aufgenommen, das sich in einem zylindrischen Lagergehäuse 80 befindet, das an einer nahezu vertikalen Wand 82 des aufrechten Halters 46 angebracht ist. Die Gelenke 74, 78, die jeweils an dem rückwärtigen Ende der Welle 68 und an dem vorderen Ende der Eingangswelle 76 angebracht sind, nehmen den gleichen Abstand zu der Schwenkachse der Deichsel 48 ein, so daß diese in einen Winkel von 45 Grad auf jeder Seite der Geradeausstellung gebracht und betrieben werden kann. Dies erlaubt es auch, die Deichsel 48 im Außerantriebszustand um 90 Grad in bezug auf ihre Geradeausstellung zu schwenken, um die Erntemaschine 10 für den Transport fertig zu machen, wenn sie auf einem fahrbaren Transportanhänger abgestellt ist.

Um den Antrieb von der Doppelgelenkwelle 72 auf die von dem Erntebergungsvorsatz 24 getragenen Antriebskomponenten übertragen zu können, ist ein in diesem Ausführungsbeispiel als Zugmittelgetriebe ausgebildetes Getriebe 84 vorgesehen. Im Einzelnen enthält das Getriebe 84 eine erste Zugmittelscheibe 86 mit einem Vielnutenprofil. Diese Zugmittelscheibe 86 ist auf die Eingangswelle 76 aufgesetzt und über mehrere Zugmittel 88, die in diesem Ausführungsbeispiel von Keilriemen gebildet werden, mit einer angetriebenen ebenfalls ein Vielnutenprofil aufweisenden Zugmittelscheibe 90 verbunden. Die angetriebene Zugmittelscheibe 90 ist auf eine ebenfalls als Stummelwelle ausgebildete Ausgangswelle 92 aufgesetzt, die sich durch ein Lager erstreckt und in diesem drehbar aufgenommen ist. Das Lager ist in einem zylindrischen Lagergehäuse 94 enthalten, das von einem an der oberen linken Fläche des Schenkels 16 befestigten Halter 96 getragen wird. Das Getriebe 84 enthält eine erste und eine zweite Spannrolle 98 und 100. Die erste Spannrolle 98 steht mit einem unteren Trum des Zugmittels 88 in einer geringfügigen Entfernung links der Zugmittelscheibe 86 in Eingriff. Die zweite Spannrolle 100 liegt an einem unteren Trum des Zugmittels 88 an einer Stelle an, die von der Mitte zwischen den Zugmittelscheiben 86 und 90 leicht zu der Zugmittelscheibe 90 hin versetzt ist. Im einzelnen ist die Spannrolle 98 an einem Endbereich eines Arms 102 angebracht, der z. B. mittels eines Bolzens 104 schwenkbar an dem Hauptträger 14 gehalten ist und mittels einer Feder 106 zwischen dem Arm 102 und dem Hauptträger 14 in Anlage an das Zugmittel 88 gespannt wird. Die Spannrolle 100 ist vertikal einstellbar an einen Halter 109 angeschlossen, der an dem Hauptträger 14 angreift.

Wenn auch das Getriebe 84 aufgrund seiner Einfachheit und seiner relativ geringen Kosten zur Übertragung der Leistung quer von der Mitte zu der Seite des Hauptrahmens 12 bevorzugt wird, wird auch erkannt, daß auch andere Antriebsmittel zur Kraftübertragung benutzt werden könnten. So könnten z. B. erste und zweite Winkelgetriebe in Rechtwinkelbauweise an dem Hauptrahmen 12 angebracht werden, wobei die Eingangswelle des einen Winkelgetriebes ähnlich oder gleich wie die Eingangswelle 76 angeordnet ist, und wobei die Ausgangswelle des anderen Winkelgetriebes ähnlich oder gleich wie die Ausgangswelle 92 vorgesehen wird. Eine Verbindungswelle würde die Ausgangswelle des einen Winkelgetriebes mit der Eingangswelle des anderen Winkelgetriebes verbinden. Ein ein erstes Getriebe auf dem Erntebergungsvorsatz darstellendes drittes Winkelgetriebe 108 weist einen Boden auf, der an das obere Ende eines rohrförmigen Stützgehäuses 110 angeschlossen ist, wobei die Unterseite des Stützgehäuses 110 an die horizontale Oberseite eines sich quer erstreckenden Vorsatzrahmenteils 112 angeschraubt ist. Wie es am besten in Figur 1 zu sehen ist, ist das dritte Winkelgetriebe 108 in Rechtwinkelbauweise ausgeführt und hat eine Eingangswelle 114, die unter einem rechten Winkel zu einer Ausgangswelle 116 verläuft, wobei die Verbindung zwischen der Ausgangswelle 116 und der Eingangswelle 114 zwecks des Antriebs der ersteren über nicht gezeigte Kegelräder erfolgt. Die Leistung wird dem dritten Winkelgetriebe 108 mittels einer zweiten teleskopischen Doppelgelenkwelle 118 zum Antreiben des Erntebergungsvorsatzes 24 zugeführt, wobei das rückwärtige Ende der Doppelgelenkwelle 118 mittels eines Gelenks 120 an ein vorderes Ende der Ausgangswelle 92 der angetriebenen Zugmittelscheibe 90 und deren vorderes Ende mittels eines Gelenks 122 an die Eingangswelle 114 angeschlossen ist.

Es ist zu erkennen, daß sich die Doppelgelenkwelle 118 infolge ihrer teleskopischen Ausbildung den sich verändernden räumlichen Beziehungen zwischen dem Erntebergungsvorsatz 24 und dem Hauptrahmen 12 anpaßt, die daher rühren, daß der Erntebergungsvorsatz 24 (a) über unebenes Gelände gleitet, (b) angehoben oder abgesenkt wird, (c) gekippt wird, um den Anstellungswinkel des Mähwerks 32 zu ändern, oder (d) die Schnitthöhe durch eine Änderung der Einstellung von Gleitkufen des Erntebergungsvorsatzes 24 geändert wird. Außerdem wird die Doppelgelenkwelle 118 so horizontal wie möglich gehalten, um den Ausschlag bei Bewegungen des Erntebergungsvorsatzes 24 zu minimieren. Diese Lage wird dadurch ermöglicht, daß sich die Doppelgelenkwelle 118 außerhalb des Hauptträgers 14 befindet, so daß sich ihr rückwärtiges Ende nicht in einer Höhe befinden muß, die ausreicht, damit sie über den Hauptträger 14 gelangt.

Die Ausgangswelle 116 ist zu der Drehachse einer links außen gelegenen Schneideinheit 124 des Mähwerks 32 ausgerichtet. Eine Durchgangswelle 126 wird mit einem oberen Ende in dem Stützgehäuse 110 aufgenommen und mittels einer Verbindungsmuffe 128 an die Ausgangswelle 116 angeschlossen. Die Durchgangswelle 126 erstreckt sich durch ein zweites Getriebe auf dem Erntebergungsvorsatz 24, nämlich dem vierten Winkelgetriebe 130, und ist mit ihrem unteren Ende mittels eines Doppelkardangelenks 132 an ein oberes Ende einer Eingangswelle 134 des Mähwerks 32 angeschlossen, die einen Teil der Schneideinheit 124 bildet. Es wird an dieser Stelle darauf hingewiesen, daß sich mit Blick von oben die Durchgangswelle 126 im Uhrzeigerdrehsinn dreht, so daß das von der Schneideinheit 124 geschnittene Erntegut nach innen geworfen wird.

Die Drehgeschwindigkeit der Durchgangswelle 126 ist relativ schnell, z. B. 2650 Umdrehungen pro Minute in dem bevorzugten Ausführungsbeispiel. Ein die Drehzahl reduzierendes nicht gezeigtes Winkelgetriebe ist zwischen die Durchgangswelle 126 und eine sich nach links erstreckende Ausgangswelle 136 eingefügt und bewirkt, daß die Ausgangswelle 136 mit ungefähr einem Drittel der Geschwindigkeit der Durchgangswelle 126, z. B. 735 Umdrehungen pro Minute in dem bevorzugten Ausführungsbeispiel, dreht. Die Ausgangswelle 136 trägt eine Zugmittelscheibe 138 mit einem Vielkeilprofil. Rückwärtig und in der Längsrichtung zu der Zugmittelscheibe 138 ausgerichtet ist eine gleiche oder ähnliche Zugmittelscheibe 140 mit Vielkeilprofil auf einer Eingangswelle 142 vorgesehen, die sich in ein Getriebe 144 zum Antrieb der Gutbearbeitungswalzen 36, 38 erstreckt, das an eine Innenseite der linken Seitenwand 26 angeschraubt ist. Ein in V-Form geripptes Zugmittel 146, also ein Mehrfachkeilriemen, ist um die Zugmittelscheiben 138 und 140 geschlungen. Ein oberes Stirnrad 148, das in Eingriff mit einem gleichen oder ähnlichen unteren auf einer rechts aus dem Getriebe 144 herausragenden Ausgangswelle 152 sitzenden Stirnrad 150 steht, ist in dem Getriebe 144 angeordnet und auf die Eingangswelle 142 aufgesetzt. Die sich nach links erstreckende Stummelwelle 42 der oberen Gutbearbeitungswalze 36 ist zum Antrieb von der Eingangswelle 142 aus mit einer teleskopischen Doppelgelenkwelle 156 für die obere Gutbearbeitungswalze 36 verbunden, deren linkes Ende mittels eines Gelenks 158 an die Eingangswelle 142 und deren rechtes Ende mittels eines Gelenks 160 an die Stummelwelle 42 angeschlossen ist. Die sich nach links erstreckende Stummelwelle 40 der unteren Gutbearbeitungswalze 38 ist zum Antrieb von der Eingangswelle 152 aus mit einer teleskopischen Doppelgelenkwelle 164 für die untere Gutbearbeitungswalze 38 verbunden, deren linkes Ende mittels eines Gelenks 166 an die Ausgangswelle 152 und deren rechtes Ende mittels eines Gelenks 168 an die Stummelwelle 40 angeschlossen ist.

Es wird darauf hingewiesen, daß jede der Schneideinheiten des Mähwerks 32 eine nicht gezeigte Abschervorrichtung enthält, die abschert, wenn die Schneideinheit einen Überlastzustand erfährt. Es besteht daher normalerweise kein Bedarf für den Einbau einer Rutschkupplung in den relativ schnell drehenden Antriebsstrang der drehenden Schneideinheiten; der Gebrauch einer Rutschkupplung könnte unerwünscht sein, da diese ziemlich schnell Hitze erzeugen würde.

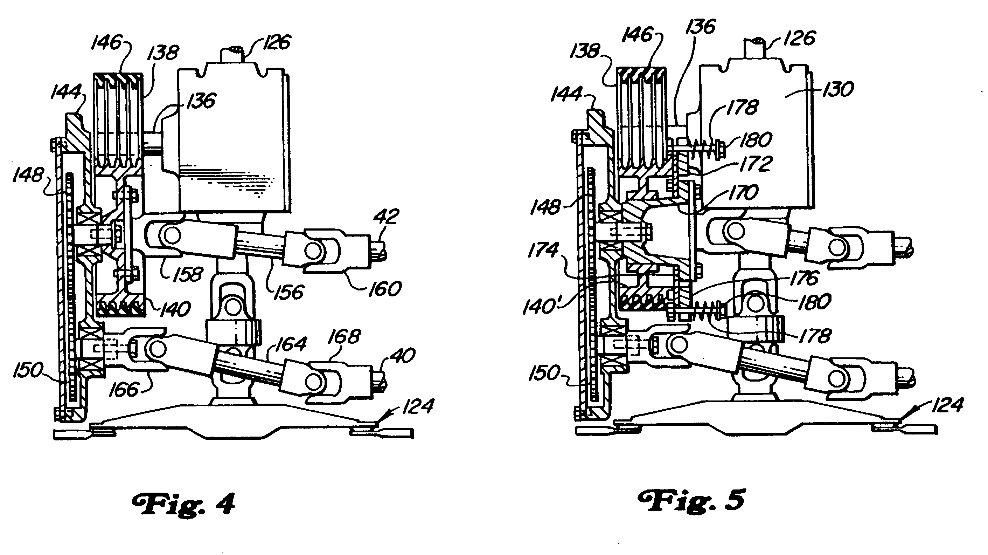

Es wird nicht als erforderlich angesehen, in dem Antriebsstrang der Gutbearbeitungswalzen 36, 38 eine Rutschkupplung vorzusehen. Wenn eine solche Rutschkupplung jedoch gewünscht wird, kann sie in den Antriebsstrang bei der getriebenen Zugmittelscheibe 140, die mit der Eingangswelle 142 des dritten Getriebes 144 des Erntebergungsvorsatzes 24 verbunden ist, eingebaut werden. Im einzelnen wird aus Figur 5 ersichtlich, daß eine mittige Nabe 170 auf der Eingangswelle 142 gesichert ist und eine zylindrische Oberfläche bildet, auf die eine angetriebene und mit vielen Keilnuten versehene Scheibe 140' frei drehbar montiert ist. Die Scheibe 140' enthält eine nach rechts weisende ringförmige Kupplungsfläche 172. Eine ringförmige Kupplungsscheibe 174 ist mit der Nabe 170 drehbar und liegt an der Kupplungsfläche 172 an. Eine ringförmige Druckplatte 176 ist an der der Kupplungsfläche 172 gegenüberliegenden Seite der Kupplungsscheibe 174 vorgesehen, wobei die Kupplungsscheibe 174 mittels Druckfedern 178, die auf entsprechenden Schrauben 180, die sich zwischen der Scheibe 140' und der Druckplatte 176 erstrecken, zwischen die Kupplungsfläche 172 und die Druckplatte 176 eingeklemmt ist. Es wird somit offenbar, daß die Scheibe 140', die Kupplungsscheibe 174, die Druckplatte 176 und die Nabe 170 als eine Einheit drehen, solange der Drehwiderstand der Gutbearbeitungswalzen 36 und 38 unterhalb des Widerstands bleibt, der die von den Druckfedern 178 ausgehende Klemmkraft übersteigt. Sollte jedoch an den Gutbearbeitungswalzen 36 und 38 eine ungewöhnliche Last auftreten, die die Klemmkraft der Druckfedern 178 übersteigt, wird die Scheibe 140' in bezug auf die Kupplungsscheibe 174 drehen bzw. rutschen, bis der Überlastzustand beseitigt ist.

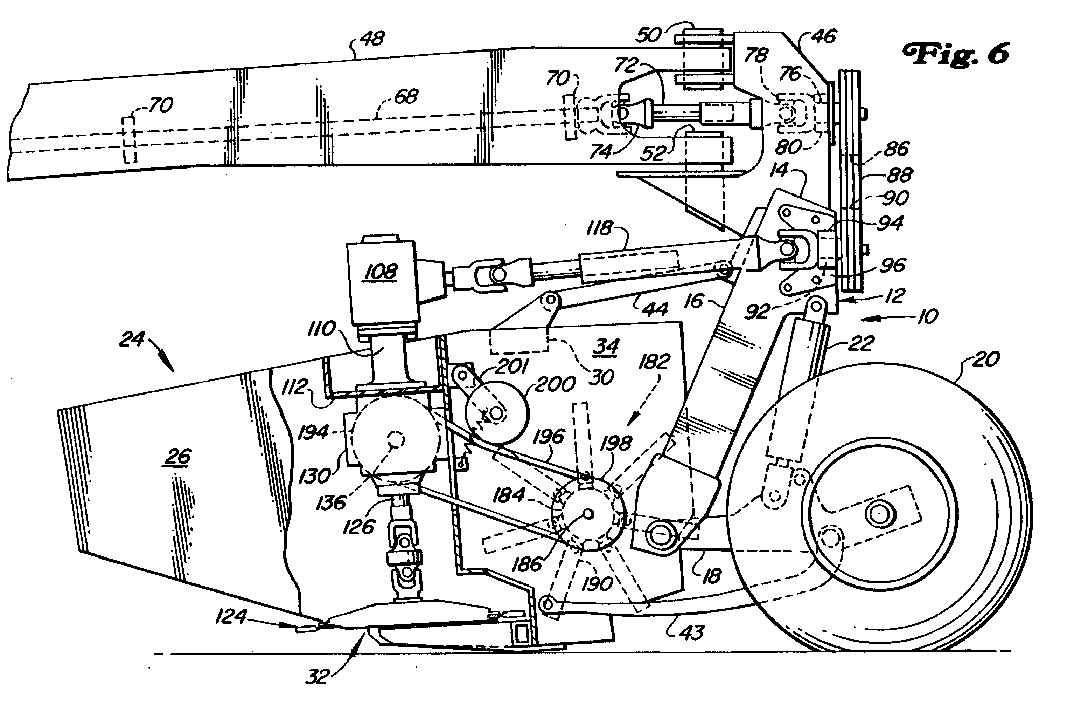

Es wird nun Bezug auf Figur 6 genommen, die einen Erntebergungsvorsatz 24' mit einem Aufbereitungsrotor 182 zeigt, der anstelle der oben beschriebenen Gutbearbeitungswalzen 36, 38 zwischen Wänden 34 eingefügt ist. Im einzelnen enthält der Aufbereitungsrotor 182 eine Trommel 184, die sich horizontal und quer von der rechten Wand 34 und durch die linke Wand 34 erstreckt. Stummelwellen 186 erstrecken sich von den entgegengesetzten Enden der Trommel 184 fort, wobei die rechte Stummelwelle 186 drehbar an die rechte Wand 34 angebracht und die linke Stummelwelle 186 drehbar von einer an der linken Wand 34 befestigten Stütze 188 aufgenommen wird. Entlang der Trommel 34 ist eine Vielzahl von Gutbearbeitungselementen 190 vorgesehen.

Der Antrieb des Aufbereitungsrotors 182 ist ähnlich dem, der für die Gutbearbeitungswalzen 36, 38 benutzt wird. Aus Gründen der Übersichtlichkeit werden nur diejenigen Teile des Antriebs im Detail beschrieben, die sich unterscheiden und die Komponenten, die mit den vorbeschriebenen gleich sind, behalten dieselben Bezugszeichen. Zuvor wird jedoch darauf hingewiesen, daß das vierte Winkelgetriebe 130 das gleiche wie das zuvor beschriebene ist, mit der Ausnahme, daß es um 180 Grad gedreht wurde, so daß die Ausgangswelle 136 jetzt nach rechts weist, wobei die Drehrichtung umgekehrt wurde, so daß es den Aufbereitungsrotor 182 mit Blick auf Figur 6 im Uhrzeigerdrehsinn dreht. Im einzelnen ist eine Zugmittelscheibe 194 mit einem Vielnutenkeilprofil auf die Ausgangswelle 136 montiert und mittels eines V-Rippen aufweisenden Zugmittels 196 zum Antrieb einer ein Vielnutenkeilprofil aufweisenden angetriebenen Zugmittelscheibe 198 verbunden, die auf eine sich nach links erstreckende Stummelwelle 186 des Aufbereitungsrotors 182 aufgesetzt ist. Eine Spannrolle 200 ist auf einem Arm 201 befestigt, der schwenkbar an einem Träger hinter dem Winkelgetriebe 130 angebracht und nach unten federnd vorgespannt ist, um die Spannrolle 200 in Anlage an einem oberen oder losen Trum des Zugmittels 196 zu halten. Es wird darauf hingewiesen, daß die Zugmittelscheiben 194, 198 unterschiedliche Durchmesser aufweisen und ausgetauscht oder durch Zugmittelscheiben anderer Größe ersetzt werden können, um die Drehgeschwindigkeit des Aufbereitungsrotors 182 ändern und die Aufbereitung bei sich ändernden Erntegütern und Erntebedingungen verbessern zu können.

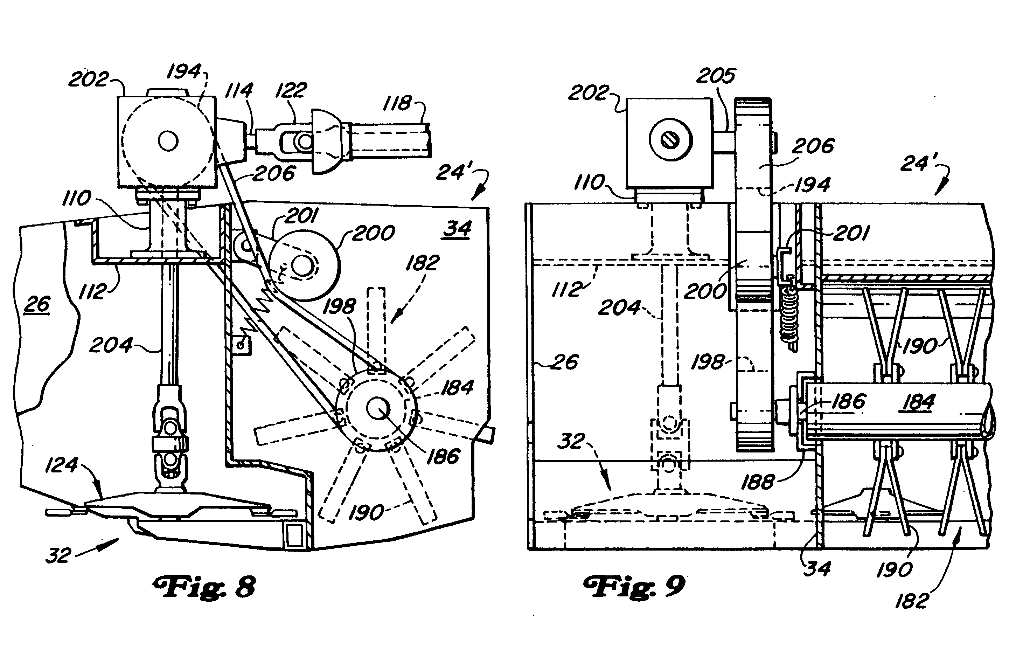

In den Figuren 8 und 9 ist eine alternative Ausführungsform für den Antrieb des Aufbereitungsrotor 182 gezeigt, wobei das dritte Winkelgetriebe 108 durch ein erstes Vorsatzgetriebe 202 ersetzt und das vierte Winkelgetriebe 130 nicht mehr verwendet wird. Eine Durchgangswelle 204 ist in dem ersten Vorsatzgetriebe 202 vorgesehen und ersetzt die sich nach unten erstreckende Ausgangswelle 116 und die Durchgangswelle 126. Eine Ausgangswelle 205 erstreckt sich von dem Vorsatzgetriebe 202 nach rechts und besitzt eine Zugmittelscheibe 194, die von ihr getragen wird und mit der angetriebenen Zugmittelscheibe 198 mittels eines als Keilriemen ausgebildeten Zugmittels 206 verbunden ist. Die Stellung des Zugmittels 206 unterscheidet sich von der des zuvor beschriebenen Zugmittels 196; jedoch ist die Befestigungsstelle der Spannrolle 200 die gleiche, da die Spannrolle 200 in Anlage mit dem oberen Trum des Zugmittels 206 gespannt wird.

Die Funktion und der Betrieb des Antriebssystems der angetriebenen Komponenten der Erntebergungsvorrichtung 24 erscheint klar von der vorgehenden Beschreibung. Die hauptsächlichen Merkmale des Antriebssystems liegen in der Art der Leistungsübertragung von der Mitte des Hauptrahmens 12 zu dem Erntebergungsvorsatz 24, was mittels des Getriebes 84 und der Dopppelgelenkwelle 118 durchgeführt wird, wobei die angetriebene Zugmittelscheibe 90 des Getriebes 84 außerhalb und in einer der Oberseite des Hauptträgers 14 angepaßten Lage vorgesehen ist. Auf diese Weise verläuft die Doppelgelenkwelle 118 ungefähr horizontal, wenn der Erntebergungsvorsatz 24 seine Arbeitsstellung einnimmt, was eine Minimierung der Arbeits-belastung an den Gelenken 120 und 122 bewirkt. Ein weiteres Merkmal des Antriebssystems ist die Überholkupplung 64, die nicht nur den Antrieb vor der Überholkupplung 64 vor negativen Lastspitzen bewahrt, sondern auch einen manuellen Rückwärts-antrieb vor bzw. stromaufwärts der Überholkupplung 64 zuläßt, um das Ausrichten der Zähne an dem vorderen Ende der Gelenkwelle, die sich von der Eingangswelle 56 des ersten Winkelgetriebes 54 nach vorne erstreckt, zu den Zähnen der Zapfwelle des Zugfahrzeugs zu vereinfachen.

Abschließend sei ausgeführt, daß die vorgenannten Gelenke grundsätzlich in der Art von Kardangelenken ausgebildet sind.

Die Trennstelle zwischen dem ersten und dem zweiten Abschnitt kann in dem Gelenk 78, die des zweiten und des dritten Abschnitts in dem Gelenk 120 und die des dritten und des vierten Abschnitts in dem Gelenk 122 gesehen werden.

## Patentansprüche

1. Erntemaschine (10) mit einem einen quer zur Fahrtrichtung verlaufenden Hauptträger (14) enthaltenden Hauptrahmen 12, einem Erntebergungsvorsatz (24), der an und vor dem Hauptrahmen (12) beweglich aufgehängt ist, einer den Hauptrahmen (12) mit einem Zugfahrzeug verbindenden Deichsel (48), die horizontal schwenkbar an dem Hauptträger (14) zwischen den seitlichen Enden des Hauptrahmens (12) angreift, und mit einem aus mehreren Abschnitten zusammengesetzten Antriebsstrang, **gekennzeichnet durch**:
a) einen ersten Abschnitt, der sich entlang der Deichsel (48) bis zu einer Eingangswelle (76) eines Getriebes (84) auf dem Hauptrahmen (12) erstreckt und diesem gegenüber schwenkbar ist;
b) einen zweiten Abschnitt, der das Getriebe (84) auf dem Hauptrahmen (12) enthält und von der Deichsel (48) quer zur Fahrtrichtung verläuft;
c) einen dritten Abschnitt, der von einer Ausgangswelle (92) des Getriebes (84) zu einer Eingangswelle (114) eines Winkelgetriebes (108) auf dem Erntebergungsvorsatz (24) führt und Relativbewegungen zwischen dem Erntebergungsvorsatz (24) und dem Hauptrahmen (12) in jeder Richtung zuläßt;
d) einen vierten Abschnitt auf dem Erntebergungsvorsatz (24), der ausgangsseitig des Winkelgetriebes (108) mit einem Mähwerk (32) und einer Gutbearbeitungsvorrichtung verbunden ist.

2. Erntemaschine nach Anspruch 1, **dadurch gekennzeichnet, daß** der erste Abschnitt eine an oder in der Deichsel (48) gelagerte Welle (68) und eine teleskopische Doppelgelenkwelle (72) enthält, die mit der Eingangswelle (76) verbunden ist.

3. Erntemaschine nach Anspruch 1 oder 2, **dadurch gekennzeichnet, daß** der erste Abschnitt eine Überholkupplung (64) aufweist.

4. Erntemaschine nach einem oder mehreren der vorherigen Ansprüche, **gekennzeichnet durch** zwei horizontal schwenkbar miteinander verbundene Winkelgetriebe (54, 58) eingangsseitig des ersten Abschnitts.

5. Erntemaschine nach einem oder mehreren der vorherigen Ansprüche, **dadurch gekennzeichnet, daß** die Schwenkachse der Deichsel (48) an dem Hauptrahmen (12) bzw. dem Hauptträger (14) die Drehachse der Eingangswelle (76) schneidet und in ihrer Geradeausstellung die Doppelgelenkwelle (72) in der Mitte schneidet.

6. Erntemaschine nach einem oder mehreren der vorherigen Ansprüche, **dadurch gekennzeichnet, daß** das Getriebe (84) des zweiten Abschnitts als Zugmittelgetriebe, insbesondere mit einem Vielkeilzugmitteltrieb, ausgebildet ist.

7. Erntemaschine nach einem oder mehreren der vorherigen Ansprüche, **dadurch gekennzeichnet, daß** die Ausgangswelle (92) des Getriebes (84) unterhalb der oberen und außerhalb der seitlichen Erstreckung des Hauptträgers (14) angeordnet ist.

8. Erntemaschine nach einem oder mehreren der vorherigen Ansprüche, **dadurch gekennzeichnet, daß** das Getriebe (84) zwei mittels eines Zugmittels (88) miteinander verbundene Zugmittelscheiben (86, 90) aufweist und auf der dem Erntebergungsvorsatz (24) abgelegenen Seite des Hauptträgers (14) angeordnet ist.

9. Erntemaschine nach einem oder mehreren der vorherigen Ansprüche, **dadurch gekennzeichnet, daß** der dritte Abschnitt eine teleskopische Doppelgelenkwelle (118) enthält.

10. Erntemaschine nach einem oder mehreren der vorherigen Ansprüche, **gekennzeichnet durch** eine Anordnung bzw. Ausbildung des Winkelgetriebes (108) des vierten Abschnitts derart, daß dessen Eingangswelle (114) im wesentlichen mit der Ausgangswelle (92) des Getriebes (84) fluchtet und dessen zu dem Mähwerk (32) des Erntebergungsvorsatzes (24) führende Ausgangswelle (116) im wesentlichen vertikal verläuft.

11. Erntemaschine nach einem oder mehreren der vorherigen Ansprüche, **dadurch gekennzeichnet, daß** das Winkelgetriebe (108) auf dem Erntebergungsvorsatz (24) über ein Zugmittelgetriebe auf die Gutbearbeitungsvorrichtung wirkt.

12. Erntemaschine nach einem oder mehreren der vorherigen Ansprüche, **dadurch gekennzeichnet, daß** dem Winkelgetriebe (108) auf dem Erntebergungsvorsatz (24) ein weiteres Winkelgetriebe (130) nachgeschaltet ist, von dem der Antrieb der Gutbearbeitungsvorrichtung abgeleitet wird.

13. Erntemaschine nach einem oder mehreren der vorherigen Ansprüche, **dadurch gekennzeichnet, daß** die Deichsel (48) in einem über den Hauptträger (14) nach oben hinausragenden turmartigen Halter (46) schwenkbar gelagert ist.

14. Erntemaschine nach einem oder mehreren der vorherigen Ansprüche, **dadurch gekennzeichnet, daß** die Deichsel (48) hohl und im wesentlichen gerade ausgebildet ist und in ihrem Innenraum die Welle (68) aufnimmt.

15. Erntemaschine nach einem oder mehreren der vorherigen Ansprüche, **dadurch gekennzeichnet, daß** die Gutbearbeitungsvorrichtung zwei parallelachsig und quer zu der Fahrtrichtung der Erntemaschine (10) verlaufende Gutbearbeitungswalzen (36, 38) aufweist, die endseitig Stummelwellen (40, 42) zur Lagerung aufweisen.

16. Erntemaschine nach einem oder mehreren der vorherigen Ansprüche, **dadurch gekennzeichnet, daß** das Winkelgetriebe (108) über ein Zugmittelgetriebe ein Getriebe (144) antreibt, das zwei Ausgangswellen aufweist, die über Doppelgelenkwellen (156, 164) mit den Stummelwellen (40, 42) der Gutbearbeitungswalzen (36, 38) drehfest in Verbindung stehen.

17. Erntemaschine nach einem oder mehreren der vorherigen Ansprüche, **dadurch gekennzeichnet, daß** zwischen das Winkelgetriebe (108) und das Getriebe (144) eine Rutschkupplung geschaltet ist.

## Claims

1. A harvesting machine (10) with a main frame (12) having a main beam (14) extending transverse to the direction of travel, a harvesting attachment (24), which is suspended movably on the and in front of the main frame (12), a drawbar (48) coupling the main frame (12) to a towing vehicle and which is attached horizontally pivotally to the main beam (14) between the side ends of the main frame (12), and with a drive train composed of a plurality of sections, **characterized by**:
a) a first section which extends along the drawbar (48) up to an input shaft (76) of a transmission (84) on the main frame (12) and can pivot relative thereto;
b) a second section which includes the transmission (84) on the main frame (12) and extends transverse to the direction of travel from the drawbar (48);
c) a third section which runs from an output shaft (92) of the transmission (84) to an input shaft (114) of an angle gear (108) on the harvesting attachment (24) and allows relative movements between the harvesting attachment (24) and the main frame (12) in any direction;
d) a fourth section on the harvesting attachment (24), which is coupled on the output side of the angle gear (108) to a mower mechanism (32) and a crop conditioning device.

2. A harvesting machine according to claim 1, **characterized in that** the first section includes a shaft (68) journalled on or in the drawbar (48) and a telescopic universal joint shaft (72), which is connected to the input shaft (76).

3. A harvesting machine according to claim 1 or 2, **characterized in that** the first section comprises an overrunning clutch (64).

4. A harvesting machine according to one or more of the preceding claims, **characterized by** two angle gears (54, 58) coupled to one another so as to be able to pivot horizontally, on the input side of the first section.

5. A harvesting machine according to one or more of the preceding claim, **characterized in that** the pivotal axis of the drawbar (48) on the main frame (12) or the main beam (14) intersects the axis of rotation of the input shaft (76) and intersects the universal joint shaft (72) in the middle in its straight line position.

6. A harvesting machine according to one or more of the preceding claims, **characterized in that** the transmission (84) of the second section is in the form of a transmission via means acting in tension, especially with a multiple groove V-belt drive.

7. A harvesting machine according to one or more of the preceding claims, **characterized in that** the output shaft (92) of the transmission (84) is arranged below the upper extent and outside the lateral extent of the main beam (14).

8. A harvesting machine according to one or more of the preceding claims, **characterized in that** the transmission (84) comprises two tension transmission pulleys (86, 90) coupled together by means (88) acting in tension and is arranged on the side of the main beam (14) remote from the harvesting attachment (24).

9. A harvesting machine according to one or more of the preceding claims, **characterized in that** the third section includes a telescopic universal joint shaft (118).

10. A harvesting machine according to one or more of the preceding claims, **characterized by** an arrangement or design of the angle gear (108) of the fourth section such that its input shaft (114) is substantially aligned with the output shaft (92) of the transmission (84) and its output shaft (116) leading to the mower mechanism (32) of the harvesting attachment (24) extends substantially vertically.

11. A harvesting machine according to one or more of the preceding claims, **characterized in that** the angle gear (108) on the harvesting attachment (24) acts on the crop conditioning device through a transmission means acting in tension.

12. A harvesting machine according to one or more of the preceding claims, **characterized in that**, a further angle gear (130) follows the angle gear (108) on the harvesting attachment (24) and the drive for the crop conditioning device is derived therefrom.

13. A harvesting machine according to one or more of the preceding claims, **characterized in that** the drawbar (48) is pivotally mounted in a tower-like bracket (46) projecting upwards above the main beam (14).

14. A harvesting machine according to one or more of the preceding claims, **characterized in that** the drawbar (48) is hollow and of substantially straight form and receives the shaft (68) in its interior.

15. A harvesting machine according to one or more of the preceding claims, **characterized in that** the crop conditioning device comprises two crop conditioning rollers (36, 38) with parallel axes, extending transverse to the direction of travel of the harvesting machine (10) and which have stub shafts (40, 42) at their ends for journaling.

16. A harvesting machine according to one or more of the preceding claims, **characterized in that** the angle gear (108) drives through a transmission means acting in tension a gearbox (144) which has two output shafts, which are coupled rotationally fast to the stub shafts (40, 42) of the crop conditioning rollers (36, 38) via universal joint shafts (156, 164).

17. A harvesting machine according to one or more of the preceding claims, **characterized in that** a slipping clutch is connected between the angle gear (108) and the gearbox (144).

## Revendications

1. Moissonneuse (10) comportant un châssis principal (12) qui contient un support principal (14) s'étendant transversalement par rapport à la direction de déplacement, un outil rapporté (24) de ramassage de la récolte, qui est suspendu de manière à être déplaçable sur et en avant du châssis principal (12), un timon (48) qui relie le châssis principal (12) à un véhicule tracteur et qui s'accroche, avec possibilité de pivotement horizontal, au support principal (14) entre les extrémités latérales du châssis principal (12), et comportant une chaîne motrice formé par la réunion de plusieurs sections, **caractérisé par**:
a) une première section qui s'étend le long du timon (48) jusqu'à un arbre d'entrée (76) d'une transmission (84) sur le châssis principal (12) et peut pivoter par rapport à ce dernier;
b) une seconde section, qui contient la transmission (84) sur le châssis principal (12) et s'étend à partir du timon (48) transversalement par rapport à la direction de déplacement;
c) une troisième section, qui s'étend d'une arbre de sortie (92) de la transmission (84) jusqu'à un arbre d'entrée (114) d'un mécanisme de renvoi angulaire (108) situé sur l'outil rapporté (24) de ramassage de la récolte et permet des déplacements relatifs entre l'outil rapporté (24) de ramassage de la récolte et le châssis principal (12) dans chaque direction;
d) une quatrième section située sur l'outil rapporté (24) de ramassage de la récolte, qui est relié, sur le côté sortie du mécanisme de renvoi angulaire (108), à une unité de coupe (32) et à un dispositif de traitement de la matière à récolter.

2. Moissonneuse selon la revendication 1, **caractérisée en ce que** la première section contient un arbre (68) monté sur ou dans le timon (48), et un arbre télescopique articulé double (72), qui est relié à l'arbre d'entrée (76).

3. Moissonneuse selon la revendication 1 ou 2, **caractérisée en ce que** la première section comporte un accouplement de rattrapage (64).

4. Moissonneuse selon une ou plusieurs des revendications précédentes, **caractérisée par** deux mécanismes de renvoi (54, 58) reliés entre eux de manière à pouvoir pivoter horizontalement, sur le côté entrée de la première section.

5. Moissonneuse selon une ou plusieurs des revendications précédentes, **caractérisée en ce que** l'axe de pivotement du timon (48) sur le châssis principal (12) ou sur le support principal (14) croise l'axe de rotation de l'arbre d'entrée (76) et, dans son orientation en ligne droite, croise l'arbre articulé double (72) au centre.

6. Moissonneuse selon une ou plusieurs des revendications précédentes, **caractérisée en ce que** la transmission (84) de la seconde section est agencée sous la forme d'une transmission travaillant en traction ou une transmission à moyen de traction, notamment un dispositif d'entraînement à moyen de traction à rainures multiples.

7. Moissonneuse selon une ou plusieurs des revendications précédentes, **caractérisée en ce que** l'arbre de sortie (92) de la transmission (84) est disposé au-dessous de l'étendue supérieure et à l'extérieur de l'étendue latérale du support principal (14).

8. Moissonneuse selon une ou plusieurs des revendications précédentes, **caractérisé en ce que** la transmission (84) comporte deux poulies (86, 90) pour le moyen de traction, qui sont reliées entre elles par un moyen de traction (88), et est disposée sur le côté du support principal (14) situé à l'opposé de l'outil rapporté (24) de ramassage de la récolte.

9. Moissonneuse selon une ou plusieurs des revendications précédentes, **caractérisée en ce que** la troisième section contient un arbre télescopique articulé double (118).

10. Moissonneuse selon une ou plusieurs des revendications précédentes, **caractérisée par** une forme ou réalisation du mécanisme de renvoi angulaire (108) de la quatrième section de telle sorte que son arbre d'entrée (114) est aligné pour l'essentiel avec l'arbre de sortie (92) de la transmission (84) et que son arbre de sortie (116), qui aboutit à l'unité de coupe (32) de l'outil rapporté (24) de ramassage de la récolte s'étend essentiellement verticalement.

11. Moissonneuse selon une ou plusieurs des revendications précédentes, **caractérisée en ce que** le mécanisme de renvoi angulaire (108) agit sur l'outil rapporté (24) de ramassage de la récolte, par l'intermédiaire de la transmission à moyen de traction aligné sur le dispositif de traitement de la matière à récolter.

12. Moissonneuse selon une ou plusieurs des revendications précédentes, **caractérisée en ce qu'**en aval du mécanisme de renvoi angulaire (108) situé sur l'outil rapporté (24) de ramassage de la récolte est monté un autre mécanisme de renvoi (130), d'où est dérivé l'entraînement du dispositif de traitement de la matière récoltée.

13. Moissonneuse selon une ou plusieurs des revendications précédentes, **caractérisée en ce que** le timon (48) est monté de manière à pouvoir pivoter dans un dispositif de retenue (46) en forme de tour qui fait saillie vers le haut au-dessus du support principal (14).

14. Moissonneuse selon une ou plusieurs des revendications précédentes, **caractérisée en ce que** le timon (48) est agencé de manière à être creux et essentiellement rectiligne et loge, dans son espace intérieur, l'arbre (68).

15. Moissonneuse selon une ou plusieurs des revendications précédentes, **caractérisée en ce que** le dispositif de traitement de la matière récoltée comporte deux cylindres (36, 38) de traitement de la matière à récolter, qui ont des axes parallèles et s'étendent transversalement par rapport à la direction de déplacement de la moissonneuse (10) et possèdent, des deux côtés, des bouts d'arbres (40, 42) pour le tourillonnage.

16. Moissonneuse selon une ou plusieurs des revendications précédentes, **caractérisée en ce que** le mécanisme de renvoi angulaire (108) entraîne par l'intermédiaire d'une transmission à moyen de traction, un mécanisme (144) qui comporte deux arbres de sortie qui sont reliés solidairement en rotation, par l'intermédiaire d'arbres articulés doubles (156, 164), aux bouts d'arbres (40, 42) des cylindres (36, 38) de traitement de la récolte.

17. Moissonneuse selon une ou plusieurs des revendications précédentes, **caractérisée en ce qu'**un embrayage patinant est monté entre le mécanisme de renvoi angulaire (108) et le mécanisme (144).
